# EUROPÄISCHE PATENTANMELDUNG

(11) **EP 3 340 150 A1**
(43) Veröffentlichungstag der Anmeldung: **27.06.2018**
(21) Anmeldenummer: 17206680.5
(22) Anmeldetag: 12.12.2017
(51) Int. Cl.: G06Q 30/00

(54) **ÜBERPRÜFEN DER AUTHENTIZITÄT DES INHALTS VON SENDUNGEN**

(30) Priorität: 22.12.2016 DE 102016125503
(71) Anmelder: Deutsche Post AG, 53113 Bonn (DE)
(72) Erfinder: IBACH, Christian, 53175 Bonn (DE); WIECHERS, Ralph, 53508 Mayschoß (DE)
(74) Vertreter: Cohausz & Florack

(57) **Zusammenfassung**

Offenbart wird u.a. ein Verfahren, das folgendes umfasst: Erfassen von Daten einer Sendung oder Erhalten von erfassten Daten einer Sendung, wobei die Sendung mit zumindest einer Information versehen ist, die ein Bestimmen von Plausibilitätsinformationen indikativ für einen zu authentifizierenden Inhalt der Sendung ermöglicht, Erfassen von Daten repräsentierend den Inhalt der Sendung oder Erhalten von erfassten Daten repräsentierend den Inhalt der Sendung, und Erzeugen einer Authentifizierungsinformation indikativ für die Authentizität des Inhalts der Sendung zumindest teilweise basierend den bestimmten Plausibilitätsinformationen und den erfassten Daten repräsentierend den Inhalt der Sendung oder Ausgeben der bestimmten Plausibilitätsinformationen und der erfassten Daten repräsentierend den Inhalt der Sendung zum Erzeugen einer Authentifizierungsinformation.

Offenbart werden ferner eine Vorrichtung zur Ausführung und/oder Steuerung dieses Verfahrens, ein System mit einer oder mehreren Vorrichtungen zur Ausführung und/oder Steuerung dieses Verfahrens und ein Computerprogramm zur Ausführung und/oder Steuerung dieses Verfahrens durch einen Prozessor.

## Beschreibung

### Gebiet

Beispielhafte Ausführungsformen betreffen das Überprüfen der Authentizität des Inhalts von Sendungen, so dass insbesondere automatisiert überprüfbar ist, ob die erwartete Ware auch tatsächlich in der Sendung enthalten ist.

### Hintergrund

Beispielsweise für Sendungen, die von Paketdiensten an ihre jeweiligen Empfänger geliefert werden, existiert bisher keine Möglichkeit, den Inhalt der jeweiligen Sendung zu authentifizieren. Zum einen besteht für die jeweiligen Empfänger der Sendung lediglich die Möglichkeit nach der Annahme der Sendung den Inhalt der Sendung durch ein Öffnen des Paketes hinsichtlich der Authentizität des Inhalts zu überprüfen. Zum anderen besteht insbesondere für Retourensendungen nicht die Möglichkeit zu überprüfen, ob die erwartete Ware auch tatsächlich im Paket enthalten ist.

### Zusammenfassung einiger beispielhafter Ausführungsformen der Erfindung

Um einen etwaigen diesbezüglichen Missbrauch ausschließen zu können, wäre es wünschenswert, einen Service zum Überprüfen der Authentizität des Inhalts der Sendungen sowohl für die jeweiligen Empfänger als auch für die Entgegennahme insbesondere von Retourensendungen bereitstellen zu können.

Bisher existiert keine Möglichkeit für einen derartigen Authentifizierungsservice. Insbesondere findet in der Regel keine Erfassung des Inhalts der Sendung weder im Zeitpunkt der Zustellung noch im Zeitpunkt der Entgegennahme in einer Station (Annahmestelle) statt.

Es wäre wünschenswert, einen Service zum Überprüfen der Authentizität des Inhalts von Sendungen bereitstellen zu können.

Gemäß einem ersten beispielhaften Aspekt wird ein Verfahren offenbart, dass folgendes umfasst:
- Erfassen von Daten einer Sendung oder Erhalten von erfassten Daten einer Sendung, wobei die Sendung mit zumindest einer Information versehen ist, die ein Bestimmen von Plausibilitätsinformationen indikativ für einen zu authentifizierenden Inhalt der Sendung ermöglicht;
- Erfassen von Daten repräsentierend den Inhalt der Sendung oder Erhalten von erfassten Daten repräsentierend den Inhalt der Sendung;
- Erzeugen einer Authentifizierungsinformation indikativ für die Authentizität des Inhalts der Sendung zumindest teilweise basierend auf den bestimmten Plausibilitätsinformationen und den erfassten Daten repräsentierend den Inhalt der Sendung oder Ausgeben der bestimmten Plausibilitätsinformationen und der erfassten Daten repräsentierend den Inhalt der Sendung zum Erzeugen einer Authentifizierungsinformation.

In einem Ausführungsbeispiel des ersten Aspekts umfasst das Verfahren das Erhalten der erfassten Daten der Sendung, das Erhalten der erfassten Daten repräsentierend den Inhalt der Sendung und das Ausgeben der Plausibilitätsinformation. In einem weiteren Ausführungsbeispiel umfasst das Verfahren das Erhalten der erfassten Daten der Sendung, das Erfassen der Daten repräsentierend den Inhalt der Sendung und das Ausgeben der Plausibilitätsinformation. Ein weiteres Ausführungsbeispiel umfasst das Erfassen der Daten der Sendung, das Erfassen der Daten repräsentierend den Inhalt der Sendung und das Erzeugen der Authentifizierungsinformation. In einem anderen Ausführungsbeispiel umfasst das Verfahren das Erfassen der Daten der Sendung, das Erhalten der erfassten Daten repräsentierend den Inhalt der Sendung und das Erzeugen der Authentifizierungsinformation.

Gemäß einem zweiten beispielhaften Aspekt wird eine Vorrichtung offenbart, die zur Ausführung und/oder Steuerung des Verfahrens nach dem ersten Aspekt eingerichtet ist, oder jeweilige Mittel zur Ausführung und/oder Steuerung der Schritte des Verfahrens gemäß dem ersten Aspekt umfasst. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Ein oder mehrere der Mittel können auch durch die gleiche Einheit und/oder Einrichtung ausgeführt und/oder gesteuert werden. Beispielsweise können ein oder mehrere der Mittel durch einen oder mehrere Prozessoren gebildet sein.

Gemäß einem dritten beispielhaften Aspekt wird eine Vorrichtung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das Verfahren gemäß dem ersten Aspekt der Erfindung auszuführen und/oder zu steuern. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Gemäß einem vierten beispielhaften Aspekt wird ein System offenbart, das eine oder mehrere Vorrichtungen umfasst, die eingerichtet sind zur Ausführung und/oder Steuerung des Verfahrens gemäß dem ersten Aspekt oder Mittel zur Ausführung und/oder Steuerung der Schritte des Verfahrens gemäß dem ersten Aspekt aufweisen. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Gemäß einem fünften beispielhaften Aspekt der Erfindung wird ein Computerprogramm offenbart, das Programmanweisungen umfasst, die einen Prozessor zur Ausführung und/oder Steuerung des Verfahrens gemäß dem ersten Aspekt veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP) Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder ein oder mehrere Schritte ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Diese fünf Aspekte weisen u.a. die nachfolgend beschriebenen - teilweise beispielhaften - Eigenschaften auf.

Daten einer Sendung werden erfasst oder erfasste Daten einer Sendung werden erhalten. Bei der Sendung kann es sich beispielsweise um einen Großbrief (der beispielsweise zur Versendung von Büchern eingesetzt wird), einen Maxibrief (der beispielsweise zur Versendung von Büchern oder Waren eingesetzt wird), ein Päckchen oder ein Paket handeln. Allerdings sind auch andersartige Sendungen denkbar. Ein Großbrief weist beispielsweise folgende Abmessungen auf: eine Länge von 10 - 35,3 cm, eine Breite von 7 - 25 cm, eine Höhe von bis zu 2 cm und ein Gewicht von bis zu 500g. Ein Maxibrief weist beispielsweise folgende Abmessungen auf: eine Länge von 10 - 35,3 cm, eine Breite von 7 - 25 cm, eine Höhe von bis zu 5 cm und ein Gewicht von bis zu 1000g. Eine Sendung kann insbesondere ein Brief, mit dem Bücher oder Waren versendet werden, oder ein Päckchen oder ein Paket sein.

Die Sendung ist mit zumindest einer Information versehen, die ein Bestimmen von Plausibilitätsinformationen ermöglicht. Zum Beispiel enthalten und/oder repräsentieren die erfassten Daten der Sendung diese Information. Die Daten der Sendung sind beispielsweise als Information in einem auf der Sendung (beispielsweise auf einem Etikett) aufgedruckten Code enthalten oder in einem mit der Sendung verbundenen (z.B. darin enthaltenen oder darauf angebrachten) auslesbaren Speicher enthalten, um nur einige Möglichkeiten zu nennen. Die Daten können beispielsweise einem vordefinierten Format folgen. Im Falle eines auf die Sendung aufgedruckten Codes kann es sich beispielsweise um einen eindimensionalen oder zweidimensionalen Barcode handeln. Beispiele für einen zweidimensionalen Barcode sind ein QR-Code oder ein Matrixcode, beispielsweise ein DataMatrix-Code.

Das Erfassen der Daten der Sendung umfasst beispielsweise das maschinelle Auslesen der Daten, beispielsweise aus dem Code (z.B. mittels optischer Erfassung) oder dem Speicher (z.B. mittels funkbasierter Erfassung, z.B. durch Technologien wie Radio Frequency Identification (RFID) oder Near Field Communication (NFC)). Das Erfassen der Daten der Sendung findet mit Mitteln zur Erfassung der Daten der Sendung statt, die beispielsweise Teil der erfindungsgemäßen Vorrichtung oder des erfindungsgemäßen Systems sind. Wenn das Verfahren gemäß dem ersten Aspekt das Erhalten erfasster Daten einer Sendung umfasst, sind die erfassten Daten beispielsweise wie zuvor beschrieben erfasst worden.

Die Daten der Sendung können insbesondere mit zumindest einer Information versehen sein, die ein Bestimmen von Plausibilitätsinformationen ermöglicht. Entsprechend können die Daten der Sendung insbesondere eine (insbesondere eindeutige) Kennung der Sendung umfassen, mittels der die Sendung (beispielsweise in einer Datenbank) von anderen Sendungen unterschieden werden kann. Bei der Kennung kann es sich beispielsweise um eine numerische oder alphanumerische Zeichenfolge handeln. Die Daten der Sendung können zusätzlich oder alternativ beispielsweise folgendes enthalten: einen Objektschlüssel (der beispielsweise die Art des zu authentifizierenden Inhalts identifiziert), ggf. kombiniert mit zumindest einem Merkmals des Objekts (z.B. ein optisches Erkennungsmerkmal eines Produkts als Inhalt der Sendung, anhand dessen der Inhalt der Sendung authentifizierbar ist). Die Daten der Sendung können beispielsweise alternativ oder zusätzlich eine Objektanzahl enthalten (z.B. eine Vielzahl von gleichen Produkten bildet den Inhalt der Sendung, oder mehrere verschiedene Produkte bilden den Inhalt der Sendung). Für den Fall, dass zumindest zwei verschiedene Objekte den Inhalt der Sendung bilden, kann für jede dieser Arten des zu identifizierenden Inhalts beispielsweise ein Objektschlüssel, ggf. kombiniert mit zumindest einem Merkmal des Objekts in den Daten der Sendung enthalten sein.

Mittels der Daten der Sendung werden Plausibilitätsinformationen bestimmt. Die Plausibilitätsinformationen sind indikativ für einen zu authentifizierenden Inhalt der Sendung. Beispielsweise können die Plausibilitätsinformationen einen Objektschlüssel (der beispielsweise die Art des zu authentifizierenden Inhalts identifiziert), ggf. kombiniert mit zumindest einem Merkmal des Objekts (z.B. ein optisches Erkennungsmerkmal, anhand dessen der Inhalt authentifizierbar ist) und/oder einen eine Sendung, die das Objekt enthält, klassifizierenden Parameter umfassen. Alternativ oder zusätzlich können die Plausibilitätsinformationen eine Objektanzahl (analog zu den vorstehenden Ausführungen) enthalten. Entsprechend erfolgt ein Bestimmen der Plausibilitätsinformationen basierend auf den Daten der Sendung. Das Objekt ist beispielsweise ein Produkt, wie z.B. eine Ware. Ein Bestimmen der Plausibilitätsinformationen kann beispielsweise erfolgen, indem eine (insbesondere eindeutige) Kennung der Sendung, die von den Daten der Sendung umfasst ist, einen Rückschluss auf die Plausibilitätsinformationen ermöglicht (z.B. indem die eine insbesondere eindeutige Kennung mit entsprechenden Plausibilitätsinformationen in einer Datenbank verknüpft ist).

Das Erfassen der Daten repräsentierend den Inhalt der Sendung umfasst beispielsweise das maschinelle Erfassen mit geeigneten Mitteln (z.B. eine entsprechende Sensorik). Die Mittel zur Erfassung der Daten repräsentierend den Inhalt der Sendung sind beispielsweise Teil der erfindungsgemäßen Vorrichtung oder des erfindungsgemäßen Systems. Wenn das Verfahren gemäß dem ersten Aspekt das Erhalten erfasster Daten repräsentierend den Inhalt der Sendung umfasst, sind die erfassten Daten beispielsweise wie zuvor beschrieben erfasst worden. Unter Daten repräsentierend den Inhalt der Sendung sollen beispielsweise Daten verstanden werden, die charakteristisch für den Inhalt der Sendung sind, wie beispielsweise ein Wert eines die Sendung klassifizierenden Parameters. Dabei soll unter dem Inhalt der Sendung insbesondere der tatsächliche Inhalt der Sendung verstanden werden.

Zumindest teilweise basierend auf den bestimmten Plausibilitätsinformationen und den erfassten Daten repräsentierend den Inhalt der Sendung wird (insbesondere automatisch) eine Authentifizierungsinformation erzeugt. Alternativ werden die bestimmten Plausibilitätsinformationen und die erfassten Daten repräsentierend den Inhalt der Sendung ausgegeben, insbesondere an eine Vorrichtung, die von einer Vorrichtung, die die Erfassungen ausführt, unterschiedlich ist.

In einer beispielhaften Ausführungsform des ersten Aspekts kann das Verfahren folgendes umfassen: Erzeugen einer Authentifizierungsinformation indikativ für die Authentizität des Inhalt der Sendung zumindest teilweise basierend auf den bestimmten Plausibilitätsinformationen und den erfassten Daten repräsentierend den Inhalt der Sendung, wobei eine Wahrscheinlichkeit hinsichtlich der Authentizität des Inhalts der Sendung bestimmt wird, die basierend auf einer Übereinstimmung zwischen den bestimmten Plausibilitätsinformationen und den erfassten Daten repräsentierend den Inhalt der Sendung ermittelt wird.

Die Wahrscheinlichkeit wird beispielsweise ermittelt, indem zumindest eine Überstimmung zwischen der bestimmten Plausibilitätsinformation und den erfassten Daten repräsentierend den Inhalt der Sendung ermittelt wird. Beispielsweise kann die ermittelte Übereinstimmung mit einem Schwellwert verglichen werden, wobei bei Überschreiten des Schwellwertes beispielsweise eine überwiegende Wahrscheinlichkeit vorliegt, wonach es sich bei dem (tatsächlichen) Inhalt der Sendung um den erwarteten (z.B. authentischen) Inhalt handelt. Entsprechend der ermittelten Wahrscheinlichkeit erfolgt ein Erzeugen der Authentifizierungsinformation. Beispielsweise kann die ermittelte Wahrscheinlichkeit zusätzlich zu den bestimmten Plausibilitätsinformationen und den erfassten Daten repräsentierend den Inhalt der Sendung zum Erzeugen einer Authentifizierungsinformation ausgegeben werden.

Zumindest basierend auf einem Vergleich zwischen den bestimmten Plausibilitätsinformationen und den erfassten Daten repräsentierend den Inhalt der Sendung wird (insbesondere automatisch) eine Authentifizierungsinformation erzeugt. Die Authentifizierungsinformation ist indikativ für die Authentizität (z.B. Echtheit) des Inhalts der Sendung. Im Falle eines positiven Vergleichsergebnisses des Vergleichs zwischen den Plausibilitätsinformationen und den erfassten Daten repräsentierend den Inhalt der Sendung ist der Inhalt der Sendung beispielsweise authentifiziert, so dass ein erwartetes Objekt (z.B. Produkt eines bestimmten Herstellers) zumindest mit einer überwiegenden Wahrscheinlichkeit auch in der Sendung enthalten ist.

Für den Fall, dass ein Objektschlüssel von den bestimmten Plausibilitätsinformationen umfasst ist, kann beispielsweise der Vergleich zwischen diesem Objektschlüssel ggf. kombiniert mit zumindest einem Merkmal des Objekts, mit einem Objektschlüssel bzw. mit dem Objektschlüssel kombiniert mit zumindest einem Merkmal des Objekts der erfassten Daten repräsentierend den (tatsächlichen) Inhalt der Sendung durchgeführt werden. Die Plausibilitätsinformationen können beispielsweise von einem bereits authentifizierten Inhalt einer vergleichbaren Sendung vorliegen und dementsprechend bestimmt werden, so dass über den vorstehenden Vergleich sichergestellt werden kann, ob es sich bei dem (tatsächlichen) Inhalt auch um den authentischen (d.h. erwarteten) Inhalt handelt oder nicht. Zusätzlich oder alternativ kann der Vergleich die Objektanzahl, die anhand der Plausibilitätsinformation bestimmt ist, mit der entsprechenden Objektanzahl, die (tatsächlich) den Inhalt der Sendung bildet und gemäß der Daten repräsentierend den Inhalt der Sendung erfasst ist, umfassen. Wenn das Verfahren gemäß dem ersten Aspekt das Ausgeben der bestimmten Plausibilitätsinformationen und der erfassten Daten repräsentierend den Inhalt der Sendung zum Erzeugen einer Plausibilitätsinformation umfasst, kann auf Basis der ausgegebenen Informationen beispielsweise das Erzeugen der Authentifizierungsinformation (insbesondere automatisch) erfolgen.

Beispielsweise kann im Falle der Durchführung und/oder Steuerung des Verfahrens im Rahmen einer Retourensendung die Sendung (z.B. ein Paket) nur dann (z.B. von einer Paketstation) angenommen werden, wenn anhand der Authentifizierungsinformation der (tatsächliche) Inhalt der Sendung positiv authentifiziert wurde. Insbesondere der Versender des Inhalts der Sendung, welcher den Inhalt mittels der Retourensendung zurück erhält, erhält dadurch eine Sicherheit, dass es sich bei dem (tatsächlichen) Inhalt der Sendung zumindest mit einer überwiegenden Wahrscheinlichkeit um den zu authentifizierenden (also den erwarteten) Inhalt handelt. Gleiches gilt für den Fall, dass eine Durchführung und/oder Steuerung des Verfahrens bei der Zustellung der Sendung an einen Empfänger der Sendung erfolgt. Der Empfänger kann auf Basis der erzeugten Authentifizierungsinformation davon Kenntnis erlangen, dass der (tatsächliche) Inhalt der Sendung zumindest mit einer überwiegenden Wahrscheinlichkeit dem zu authentifizierenden (also dem tatsächlich erwarteten) Inhalt entspricht. Derart kann ein Service zum Überprüfen der Authentizität des Inhalts von Sendungen - ein Authentifizierungsservice - bereitgestellt werden.

Gemäß einer beispielhaften Ausführungsform aller Aspekte sind die Plausibilitätsinformationen und die Daten repräsentierend den Inhalt der Sendung indikativ für zumindest einen der folgenden den Inhalt der Sendung klassifizierenden Parameter:
(i) Gewicht des Inhalts der Sendung; (ii) Größe des Inhalts der Sendung; (iii) Chemische Zusammensetzung des Inhalts der Sendung; (iv) Optische Merkmale des Inhalts der Sendung; (v) Objekterkennung des Inhalts der Sendung; (vi) Markenerkennung des Inhalts der Sendung; (vii) Produkterkennung des Inhalts der Sendung; (viii) Anzahl der Objekte des Inhalts der Sendung; (ix) Barcode umfasst von dem Inhalt der Sendung; (x) Magnetismus des Inhalts der Sendung; (xi) oder eine Kombination hiervon.

Die Plausibilitätsinformationen sind indikativ für zumindest einen den Inhalt der Sendung klassifizierenden Parameter, wobei die Plausibilitätsinformationen beispielsweise auf einem (bereits) authentifizierten Inhalt einer Sendung basieren. Die Plausibilitätsinformationen werden alternativ oder zusätzlich beispielsweise von dem Versender des Inhalt der Sendung bereitgestellt. Die entsprechenden den Inhalt der Sendung klassifizierenden Parameter sind beispielsweise bereits zu einem früheren Zeitpunkt bestimmt worden (z.B. auf Basis eines identischen Inhalts einer oder mehrerer Sendungen, die ein oder mehrere Kunden bereits zuvor beispielsweise im Rahmen einer Retoure versendet haben).

Die Daten repräsentierend den Inhalt der Sendung sind indikativ für zumindest einen den Inhalt der Sendung klassifizierenden Parameter, wobei der tatsächliche Inhalt der Sendung hierfür im Rahmen des Erfassens von Daten oder Erhaltens der erfassten Daten repräsentierend den Inhalt der Sendung bestimmt werden. Zum Beispiel sind die Daten repräsentierend den Inhalt der Sendung indikativ für einen Wert zumindest eines den Inhalt der Sendung klassifizierenden Parameters (z.B. enthalten diese Daten einen solchen Wert).

Die chemische Zusammensetzung des Inhalts der Sendung kann beispielsweise eine von außen (z.B. mittels eines chemischen Sensors) erfassbare Messgröße sein. Beispielsweise kann die chemische Zusammensetzung mittels elektrochemischer Analysemittel erfasst werden, welche biochemische Komponenten des Inhalts der Sendung erfassen können (z.B. Glukose-, Cholesterin-, Lactat- und/oder Alkoholkomponenten, die der Inhalt der Sendung aufweist).

Ein optisches Merkmal des Inhalts der Sendung kann beispielsweise eine bestimmte Farbe (z.B. eines Teils) des Inhalts sein. Ein weiteres optisches Merkmal kann beispielsweise eine Spiegelungseigenschaft des Inhalts der Sendung sein. Beispielsweise kann ein signifikantes Merkmal, z.B. der Form oder Farbe des Inhalts der Sendung ein optisches Merkmal sein.

Die Objekterkennung des Inhalts der Sendung kann beispielsweise durch eine Identifizierung der Art des Inhalts (z.B. eine bestimmte Ware) ermöglicht sein.

Die Markenerkennung des Inhalts der Sendung kann beispielsweise über eine auf dem Inhalt der Sendung angeordnete Kennzeichnung (z.B. ein Aufdruck eines Markenlogos oder dergleichen) ermöglicht sein.

Die Produkterkennung des Inhalts der Sendung kann im Gegensatz zu der Objekterkennung die Identifizierung des Inhalt der Sendung mit einer Zuordnung zu einem bestimmten Hersteller umfassen.

Ein Barcode, welcher von dem Inhalt der Sendung umfasst ist (z.B. auf dem Inhalt der Sendung aufgedruckt ist), kann beispielsweise als Kennung eine Objekt-, Marken- und/oder Produkterkennung des Inhalts der Sendung ermöglichen. Zusätzlich oder alternativ können beispielsweise neben diesen Parameter auch das Gewicht, die Größe, die chemische Zusammensetzung, der Magnetismus mittels des Barcodes bestimmt werden (z.B. über eine entsprechende Datenbankabfrage).

Der Magnetismus des Inhalts der Sendung kann beispielsweise ein binärer Parameter sein, der indikativ ist, ob der Inhalt der Sendung magnetisch ist oder nicht. Zusätzlich oder alternativ kann der Parameter Magnetismus beispielsweise eine magnetische Feldstärke angeben, die der Inhalt der Sendung aufweist.

Gemäß einer beispielhaften Ausführungsform aller Aspekte wird im Rahmen des Vergleichs mindestens ein den Inhalt der Sendung klassifizierender Parameter der Plausibilitätsinformationen mit einem entsprechenden Parameter der erfassten Daten repräsentierend den Inhalt der Sendung verglichen.

Gemäß einer beispielhaften Ausführungsform aller Aspekte werden die Daten repräsentierend den Inhalt der Sendung mit mindestens einem Sensor erfasst.

Mittels des mindestens einen Sensors können beispielsweise die Daten der Sendung (z.B. die Information, die ein Bestimmen von Plausibilitätsinformationen ermöglicht) und/oder die Daten repräsentierend den Inhalt der Sendung indikativ für zumindest einen den Inhalt der Sendung klassifizierenden Parameter erfasst werden. Der mindestens eine Sensor kann beispielsweise von einer erfindungsgemäßen Vorrichtung und/oder von einem erfindungsgemäßen System umfasst sein. In einer Ausgestaltung können beispielsweise ein oder mehrere Sensoren miteinander gekoppelt sein, um insbesondere ein oder mehrere unterschiedliche Plausibilitätsinformationen und die Daten repräsentierend den Inhalt der Sendung indikativ für zumindest einen den Inhalt der Sendung klassifizierenden Parameter erfassen zu können. Zum Beispiel enthalten die Daten repräsentierend den Inhalt der Sendung einen durch einen Sensor für die Sendung und/oder den Inhalt der Sendung erfassten Wert. Der Wert repräsentiert beispielsweise zumindest einen Inhalt der Sendung klassifizierenden Parameter.

Zur Erfassung eines Gewichts des Inhalts der Sendung kann insbesondere ein Gewichtssensor (z.B. ein Kraftsensor) eingesetzt werden. Mittels des Gewichtssensors kann über die auf den Gewichtssensor wirkende Kraft beispielsweise das Gewicht des Inhalts der Sendung bestimmt werden.

Zur Erfassung der Größe des Inhalts der Sendung kann beispielsweise ein optischer Sensor verwendet werden. Der optische Sensor ist beispielsweise ein kameraartiges Element, mit dem eine Bildinformation erfassbar ist. Die Bildinformation, ist beispielsweise über Auswertungsmittel (z.B. eine Auswerteeinheit), auswertbar, so dass beispielsweise die Größe des Inhalts der Sendung bestimmt werden kann. Ein optischer Sensor nach der vorstehenden Art (insbesondere als kameraartiges Element) kann beispielsweise zusätzlich oder alternativ eine Erfassung von zumindest einem optischen Merkmal des Inhalts der Sendung, einer Objekterkennung des Inhalts der Sendung, einer Markenerkennung des Inhalts der Sendung, einer Produkterkennung des Inhalts der Sendung, einer Anzahl der Objekte des Inhalts der Sendung, einen Barcode oder eine Kombination hiervon ermöglichen.

Im Falle der Erfassung eines Barcodes mittels eines optischen Sensors kann insbesondere eine auf der Sendung oder auf dem Inhalt der Sendung angebrachte Kennung (z.B. ein EAN-Code (EAN: European Article Number) und/oder ein GS1-Code (GS1: Global Standards One)) erfasst werden. Beispielsweise über eine Abfrage einer Datenbank, in welcher zu der Kennung weitere Informationen hinterlegt sind, die beispielsweise auf den Inhalt der Sendung klassifizierende Parameter referenzieren, können diese weitere Informationen bestimmt werden.

Zur Erfassung einer chemischen Zusammensetzung kann insbesondere ein mikrofluidischer Sensor, der insbesondere eine elektrochemische Analyse von zum Beispiel biochemischen Komponenten und/oder Stoffen und/oder Stoffzusammensetzungen erfassen kann, verwendet werden.

Zur Erfassung eines Magnetismus kann beispielsweise ein mikroelektromechanischer Sensor (MEMS: microelectromechanical sensor) eingesetzt werden. Ein mikroelektromechanischer Sensor ermöglicht das Erfassen eines vorhandenen Magnetismus und/oder eines vorhandenen magnetischen Feldes und/oder die Erfassung der Feldstärke eines magnetischen Feldes.

Gemäß einer beispielhaften Ausgestaltung nach allen Aspekten umfasst die zumindest eine Information der Sendung eine Referenzinformation, welche insbesondere durch mit in einer Datenbank hinterlegten Plausibilitätsinformationen verknüpft und/oder assoziiert ist. Die Referenzinformation ist beispielsweise von den Daten der Sendung umfasst. Die Referenzinformation ist beispielsweise eine Electronic Data Interchange (EDI)-Information, welche zum Beispiel einen digitalen Datenaustausch zwischen einem Kunden und einem Transportunternehmen, welches mit dem Transport der Sendung beauftragt ist, ermöglicht. Die Referenzinformation ist beispielsweise eine Pre-Advice-Notification (PAN)-Information. Die Referenzinformation ermöglicht insbesondere eine eindeutige Identifikation der Sendung.

Eine beispielhafte Ausgestaltung nach allen Aspekten sieht vor, dass die in der Datenbank hinterlegten Plausibilitätsinformationen signiert von mindestens einer vertrauenswürdigen Drittpartei hinterlegt sind. Beispielsweise kann eine vertrauenswürdige Beziehung zwischen (z.B. einem Server) und einer erfindungsgemäßen Vorrichtung und/oder einer Vorrichtung eines erfindungsgemäßen Systems bestehen, wobei diese vertrauenswürdige Beziehung beispielsweise basierend auf einem Austausch von Zertifikaten und/oder öffentlichen kryptographischen Schlüsseln aufbaubar ist. Entsprechend kann sichergestellt werden, dass die in der Datenbank hinterlegten Plausibilitätsinformationen vertrauenswürdig und/oder authentifiziert sind. Die austauschbaren Zertifikate und/oder öffentlichen kryptographischen Schlüssel repräsentieren beispielsweise Stammdaten eines Webshops und/oder von Drittparteien, deren Identität insbesondere überprüft wurde (z.B. durch ein vorgelagertes Überprüfungsverfahren, beispielsweise mittels eines Austauschs von zumindest einem Zertifikat und/oder zumindest einem öffentlichen kryptographischen Schlüssel).

Gemäß einer beispielhaften Ausgestaltung ist vorgesehen, dass das Erfassen von Daten repräsentierend den Inhalt der Sendung mittels einer Annahmeeinrichtung und/oder einer Ausgabeeinrichtung ermöglicht ist. Die Annahmeeinrichtung und/oder die Ausgabeeinrichtung ist beispielsweise von einer Entgegennahmeeinrichtung (z.B. von einer Station (Paketstation)) und/oder von einem Scanner (z.B. von einem Zusteller der Sendung)) umfasst. Insbesondere sind mittels der Annahmeeinrichtung und/oder der Ausgabeeinrichtung die Erfassungen und/oder die Erzeugungen gemäß aller Aspekte der Erfindung möglich.

Gemäß einer beispielhaften Ausgestaltung ist der mindestens eine Sensor in die Annahmeeinrichtung und/oder die Ausgabeeinrichtung integriert.

In einer beispielhaften Ausgestaltung nach allen Aspekten umfasst das Verfahren
weiterhin: - Hinterlegen von erfassten Daten repräsentierend den Inhalt der Sendung als Plausibilitätsinformationen in einer Datenbank.

In einer beispielhaften Ausgestaltung wird eine Vielzahl von erfassten Daten repräsentierend den Inhalt der Sendung als Plausibilitätsinformationen in einem Datensatz von Plausibilitätsinformationen hinterlegt.

Die Datenbank speichert beispielsweise eine Vielzahl von Plausibilitätsinformationen. Mehrere Plausibilitätsinformationen betreffend einen Inhalt einer Sendung können beispielsweise in einem für die Sendung spezifischen Datensatz zusammengefasst sein. Jede Plausibilitätsinformation ist beispielsweise einem jeweiligen Inhalt einer Sendung zugeordnet. Zu diesem Inhalt der Sendung enthält die jeweilige Plausibilitätsinformation zumindest eine Information (z.B. einen den Inhalt der Sendung klassifizierenden Parameter). Eine jeweilige Plausibilitätsinformation ist beispielsweise mit einer Referenzinformation (z.B. eine Kennung) der Sendung verknüpft und/oder assoziiert. Diese Referenzinformation kann beispielsweise auch in den Daten der Sendung enthalten sein, die bei den Erfassungen gemäß aller Aspekte erfasst werden. Wenn also Daten einer Sendung an einer Station (z.B. eine Packstation) oder bei einer Zustellung der Sendung (z.B. durch einen Scanner) erfasst werden, kann zumindest basierend auf den erfassten Daten (insbesondere die Kennung der Sendung) eine Plausibilitätsinformation bestimmt werden, wobei die Plausibilitätsinformation beispielsweise das Gewicht, die Größe, zumindest ein optisches Merkmal, die Anzahl von Objekten, einen Barcode des Inhalts der Sendung, oder eine Kombination hiervon umfasst. Die Datenbank kann beispielsweise eine zentrale Datenbank sein, wobei in der Datenbank hinterlegte Informationen beispielsweise über ein Kommunikationsnetz abfragbar sind.

Gemäß einer beispielhaften Ausgestaltung nach allen Aspekten umfasst das Verfahren weiterhin zumindest einen der folgenden Verfahrensschritte:
- Bestimmen einer Heuristikanalyseinformation basierend auf den erfassten Daten repräsentierend den Inhalt der Sendung;
- Erzeugen einer Prüfvorgabeinformation indikativ für ein manuelles Authentifizieren des Inhalts der Sendung oder Ausgeben der bestimmten Heuristikanalyseinformation zum Erzeugen einer Prüfvorgabeinformation.

Die erfassten Daten repräsentierend den Inhalt der Sendung werden zum Bestimmen der Heuristikanalyseinformation genutzt. Beispielsweise können zusätzlich oder alternativ die erfassten Daten der Sendung zum Bestimmen der Heuristikanalyseinformation genutzt werden. Das Bestimmen der Heuristikanalyseinformation kann beispielsweise auf Basis einer Generierung einer Statistik über die erfassten Daten repräsentierend den Inhalt der Sendung erfolgen. Zusätzlich können weitere von den Daten der Sendung umfasste Informationen, wie z.B. der Ort (bei Annahme oder Zustellung der Sendung), die Zeit, der Inhalt der Sendung, der Absender, der Empfänger, oder eine Kombination hiervon beim Bestimmen der Heuristikanalyseinformation berücksichtigt werden.

Die Heuristikanalyseinformation ist beispielsweise indikativ für einen Inhalt der Sendung, der mitunter negativ authentifizierbar ist. Entsprechend ist die Heuristikanalyseinformation also indikativ dafür, ob der Inhalt der Sendung mit einer gewissen Wahrscheinlichkeit (z.B. vordefiniert anhand eines zu überschreitenden Schwellwertes) der tatsächlich erwartete Inhalt ist oder nicht. Auf dieser Basis wird die Prüfvorgabeinformation erzeugt, die beispielsweise eine Handlungsvorgabe für eine Person (z.B. ein Mitarbeiter einer Station (z.B. Paketstation) oder ein Zusteller) umfasst, um den Inhalt der Sendung authentifizieren zu können. Beispielsweise ist mittels einer bestimmten Überprüfung des Inhalts bestimmbar, ob der Inhalt der Sendung echt ist, oder ob es sich zum Beispiel um eine nachgemachte Ware handelt.

Auf Basis der Heuristikanalyseinformation wird eine Prüfvorgabeinformation erzeugt. Insbesondere wird eine Prüfvorgabeinformation für den Fall erzeugt, dass die bestimmte Heuristikanalyseinformation die Authentizität des Inhalts der Sendung anzweifelt. Dies ist beispielsweise dann der Fall, wenn der Inhalt der Sendung mit einer gewissen Wahrscheinlichkeit nicht der tatsächlich erwartete Inhalt ist. Beispielsweise kann hierfür ein Vergleich einer berechneten Wahrscheinlichkeit basierend auf der Heuristikanalyseinformation mit einem vordefinierten Schwellwert von dem Verfahren umfasst sein. Bei Überschreiten des vordefinierten Schwellwertes kann die Heuristikanalyseinformation entsprechend indikativ dafür sein, dass der Inhalt der Sendung nicht dem tatsächlich erwarteten Inhalt der Sendung entspricht.

In einer beispielhaften Ausgestaltung nach allen Aspekten der Erfindung wird die Prüfvorgabeinformation in einer Datenbank hinterlegt wird. Die Prüfvorgabeinformation ist beispielsweise - analog zu den Plausibilitätsinformationen - mit einer Referenzinformation (z.B. eine Kennung) der Sendung verknüpft und/oder assoziiert. Die Datenbank kann beispielsweise eine zentrale Datenbank sein, wobei in der Datenbank hinterlegte Informationen beispielsweise über ein Kommunikationsnetz abfragbar sind. Die Prüfvorgabeinformation kann in derselben Datenbank wie die Plausibilitätsinformationen hinterlegt sein.

Gemäß einer beispielhaften Ausführungsform aller Aspekte umfasst das Verfahren weiterhin ein Erfassen einer Nutzereingabe oder Erhalten einer erfassten Nutzereingabe bei Vorliegen der Prüfvorgabeinformation. Die Nutzereingabe kann beispielsweise mit oder ohne Hilfsmittel durch eine Person eingegeben werden. Zur Eingabe der Prüfvorgabeinformation kann beispielsweise eine Benutzerschnittstelle benutzt werden. Die Benutzerschnittstelle kann beispielsweise eine Eingabevorrichtung (z.B. eine Tastatur, berührempfindliches Display oder dergleichen) sein, mittels der eine Eingabe von dem Nutzer (z.B. Person) erfassbar ist. Die Nutzereingabe kann beispielsweise für den Fall erfolgen, dass die Prüfvorgabeinformation (z.B. seitens einer Person) überprüft wurde. Insbesondere ist die Person in der Lage zu entscheiden, ob die von der Prüfvorgabeinformation vorgegebene Anforderung zum Authentifizieren (z.B. ein optisches Merkmal) des Inhalts der Sendung vorliegt oder nicht. Entsprechend dieser Entscheidung kann beispielsweise die Nutzereingabe die Authentizität des Inhalts der Sendung bestätigen oder negieren.

Die oben beschriebenen, zunächst grundsätzlich für sich alleine stehenden Ausführungsformen und beispielhaften Ausgestaltungen aller Aspekte sollen auch in allen Kombinationen miteinander verstanden werden.

Weitere vorteilhafte beispielhafte Ausgestaltungen sind der folgenden detaillierten Beschreibung einiger beispielhafter Ausführungsformen, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches dienen. Die beiliegenden Zeichnungen sind nicht notwendigerweise maßstabsgetreu und sollen lediglich das allgemeine Konzept beispielhaft widerspiegeln. Insbesondere sollen Merkmale, die in den Figuren enthalten sind, keineswegs als notwendiger Bestandteil erachtet werden.

### Kurze Beschreibung der Figuren

Es zeigen:
- Fig. 1:: eine schematische Darstellung einer beispielhaften Ausführungsform eines Systems gemäß dem vierten Aspekt;
- Fig. 2:: ein Flussdiagramm einer beispielhaften Ausgestaltung eines Verfahrens gemäß dem ersten Aspekt;
- Fig. 3:: ein Flussdiagramm einer beispielhaften Ausgestaltung eines Verfahrens gemäß dem ersten Aspekt und
- Fig. 4:: eine schematische Darstellung einer beispielhaften Ausführungsform einer Vorrichtung gemäß dem zweiten oder dritten Aspekt.

### Detaillierte Beschreibung einiger beispielhafter Ausführungsformen der Erfindung

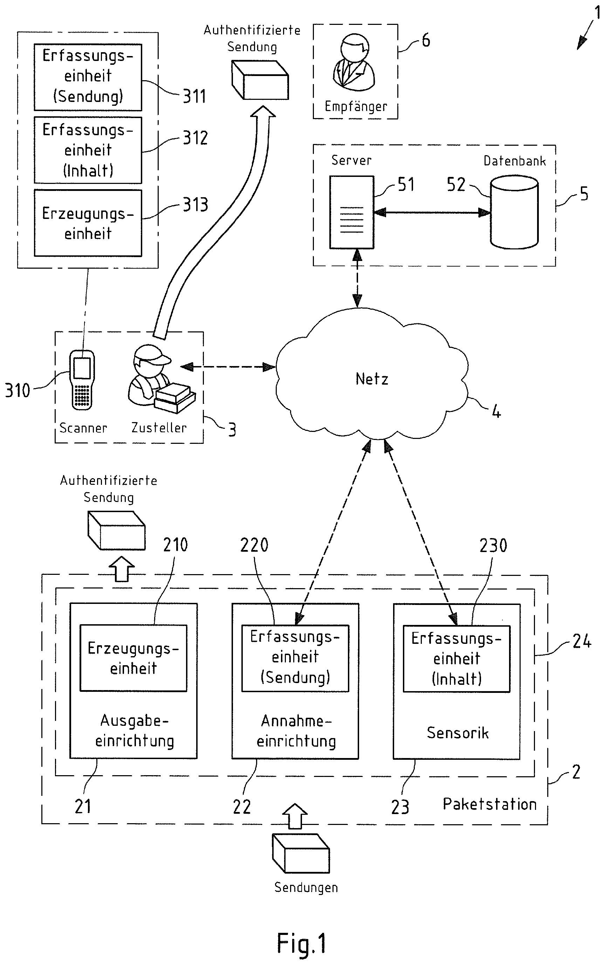

Fig. 1 ist eine schematische Darstellung einer beispielhaften Ausführungsform eines Systems 1 gemäß der vorliegenden Erfindung. Das System 1 umfasst eine Paketstation 2, einen Zusteller 3, ein Netz 4, eine zentrale Rechen- und Speichereinrichtung 5 und einen Empfänger 6. Die breiten Pfeile symbolisieren dabei den regelmäßigen Fluss von Sendungen, die von einem Absender (z.B. in der Paketstation 2) entgegen genommen werden und an einen Empfänger (z.B. Empfänger 6) zugestellt werden. Die gestrichelten Pfeile symbolisieren den Austausch von Informationen ausgehend von den unterschiedlichen Komponenten des Systems 1.

Die Paketstation 2 umfasst eine Entgegennahmeeinrichtung 24, welche wiederrum eine Ausgabeeinrichtung 21, eine Annahmeeinrichtung 22 und Sensorik 23 umfasst. Obwohl in Fig. 1 die Ausgabeeinrichtung 21, die Annahmeeinrichtung 22 und die Sensorik 23 als dedizierte Komponenten exemplarisch dargestellt sind, sind diese alternativ oder zusätzlich in einer Einrichtung integriert.

Die Paketstation 2 umfasst eine Erzeugungseinrichtung 210, in Fig. 1 umfasst von der Ausgabeeinrichtung 21. Die Paketstation 2 umfasst eine Erfassungseinheit (Sendung) 220, in Fig. 1 umfasst von der Annahmeeinrichtung 22. Die Paketstation 2 umfasst eine Erfassungseinheit (Inhalt) 230, in Fig. 1 umfasst von der Sensorik 23. Die Erzeugungseinrichtung 210, die Erfassungseinheit (Sendung) 220, sowie die Erfassungseinheit (Inhalt) 230 sind alternativ in einer Einrichtung integriert.

Der Zusteller 3 weist vorliegend einen Scanner 310 auf. Analog zu der Entgegennahmeeinrichtung 24, umfasst der Scanner 310 eine Erfassungseinheit (Sendung) 311, eine Erfassungseinheit (Inhalt) 312 und eine Erzeugungseinheit 313. Vorliegend sind die Erfassungseinheit (Sendung) 311, die Erfassungseinheit (Inhalt) 312 und die Erzeugungseinheit 313 in den Scanner 310 integriert, alternativ ist zumindest eine der Komponenten Erfassungseinheit (Sendung) 311, Erfassungseinheit (Inhalt) 312 und Erzeugungseinheit 313 dediziert eingerichtet und/oder ausgebildet.

Die zentrale Rechen- und Speichereinrichtung 5 umfasst einen Server 51 und eine Datenbank 52. Der Server 51 und die Datenbank 52 sind alternativ oder zusätzlich separiert voneinander und über eine Kommunikationsverbindung zum Austausch von Daten miteinander verbunden. Der Server 51 und die Datenbank 52 sind in einer alternativen Ausgestaltung in einer Einrichtung zusammen eingerichtet.

Die Paketstation 2, der Zusteller 3, die zentrale Rechen- und Speichereinrichtung 5 sind über das Netz 4 miteinander verbunden. Entsprechend können die Paketstation 2, der Zusteller 3, die zentrale Rechen- und Speichereinrichtung 5 untereinander beispielsweise Kommunikationsverbindungen zum Austausch von Daten aufbauen und entsprechend nutzen.

In einem Ausführungsbeispiel möchte beispielsweise eine Person eine Retourensendung versenden. Die Person kommt also mit einem (unverschlossenen) Paket in eine Station (z.B. Paketstation 2). Ein Mitarbeiter der Station erfasst Daten der Retourensendung, z.B. eine Referenzinformation (z.B. eine auf der Sendung aufgedruckte oder von der Sendung umfasste Kennung (z.B. eine ID, ein Barcode, oder dergleichen)). Das Erfassen der Referenzinformation kann beispielsweise mit der Annahmeeinrichtung 22 erfolgen, die die Erfassungseinheit 220 umfasst (z.B. jeweils umfasst von der Entgegennahmeeinrichtung 24). Die Erfassungseinheit 220 kann beispielsweise mit entsprechender Sensorik, wie z.B. mindestens einen Sensor aufweisen, bzw. der mindestens eine Sensor kann in der Erfassungseinheit 220 integriert sein. Alternativ oder zusätzlich, kann zur Erfassung auch die Erfassungseinheit 230 der Sensorik 23, jeweils umfasst von der Entgegennahmeeinrichtung 24, verwendet werden. Die Erfassungseinheit 230 weist eine Sensorik, wie z.B. mindestens einen Sensor auf, mit dem ein Erfassen von Daten der Sendung, vorliegend die Retourensendung, möglich ist.

Die Entgegennahmeeinrichtung 24 bestimmt, beispielsweise über eine Abfrage der Datenbank 52, die beispielsweise an den Server 51 über das Kommunikationsnetz 4 gesendet wird, Plausibilitätsinformationen, die indikativ für einen zu authentifizierenden Inhalt der Sendung sind. Beispielsweise kann die Plausibilitätsinformation in der Datenbank hinterlegt worden sein, als eine Sendung mit vergleichbarem Inhalt zu einem früheren Zeitpunkt (z.B. von einer anderen Person) versendet wurde. Zusätzlich oder alternativ können die Plausibilitätsinformationen von dem Versender des Inhalts der Retourensendung (der beispielsweise im Rahmen eines Onlineeinkaufes von der Person erworben wurde) in der Datenbank 52 hinterlegt sein. Die Plausibilitätsinformation umfassen beispielsweise 'Soll-Daten' für den Inhalt der Sendung, beispielsweise Größe, optisches Merkmal, Anzahl der Waren, etc.

Anschließend erfolgt ein Erfassen von Daten repräsentierend den Inhalt der Sendung, z.B. mittels der Erfassungseinheit 230 der Sensorik 23. Da es sich bei der zu versendenden Retourensendung um eine unverschlossene Sendung handelt, kann der tatsächliche Inhalt (,Ist-Daten') mittels der Sensorik 23 erfasst werden. Wie bereits ausgeführt, weist die Erfassungseinheit 230 der Sensorik 23 beispielsweise mindestens einen Sensor, z.B. einen optischen Sensor auf, so dass beispielsweise eine Bildinformation des tatsächlichen Inhalts der Sendung erfasst werden kann. Die Bildinformation kann beispielsweise von einer von der Entgegennahmeeinrichtung 24 umfassten Auswerteeinheit (nicht dargestellt) ausgewertet werden, um beispielsweise die Größe, zumindest ein optisches Merkmal, die Anzahl der Objekte, oder dergleichen etc. des Inhalts der Retourensendung zu erfassen. Eine entsprechende Auswerteeinheit kann beispielsweise auch auf einem Server, z.B.

Server 51 implementiert sein, wobei die erfasste Bildinformation beispielsweise verbunden mit einer Anfrage zur Auswertung der Bildinformation über das Netz 4 an den Server (z.B. Server 51) gesendet wird. Nach der Auswertung der Bildinformation erfolgt beispielsweise ein Zurücksenden zumindest eines den Inhalt der Sendung klassifizierenden Parameter als Antwort, die von der Entgegennahmeeinrichtung 24 empfangen wird. Der Parameter ist dabei beispielsweise indikativ für die Größe, zumindest ein optisches Merkmal, die Anzahl der Objekte, oder weitere im Rahmen dieser Spezifikation angeführten Parameter des Inhalts der Sendung.

Optional kann eine Heuristik-Prüfung erfolgen, wobei ein Bestimmen einer Heuristikanalyseinformation erfolgt. Ergibt diese Heuristik-Prüfung beispielsweise, dass es in letzter Zeit häufig Betrugsfälle bei der Retoure von gleichen Inhalten der Sendung vorgekommen sind, kann beispielsweise eine Prüfvorgabeinformation erzeugt werden. Die Prüfvorgabeinformation kann beispielsweise auf einer Anzeigevorrichtung (nicht dargestellt) der Entgegennahmeeinrichtung 24 wiedergegeben werden. Die Prüfvorgabeinformation kann beispielsweise eine Aufforderung an einen Mitarbeiter der Paketstation 2 enthalten und diesen Auffordern, manuell die Authentizität des Inhalt der Retourensendung zu überprüfen. Handelt es sich z. B. bei dem Inhalt der Retourensendung um ein Smartphone, und die Betrugsfälle beziehen sich beispielsweise auf entwendete Akkus der Smartphone, kann beispielsweise die Prüfvorgabeinformation den Mitarbeiter dazu auffordern, das Smartphone einzuschalten um sicherzustellen, dass der Akku des Smartphones nicht entfernt wurde. Anschließend kann eine Nutzereingabe erfasst werden, die beispielsweise indikativ für ein Erfolgreiches Überprüfen hinsichtlich der Prüfvorgabeinformation ist.

Anschließend wird eine Authentifizierungsinformation erzeugt. Hierzu wird ein Vergleich zwischen den bestimmten Plausibilitätsinformationen und den erfassten Daten repräsentierend den Inhalt der Sendung durchgeführt. Basierend auf diesem Ergebnis, optional verbunden mit der,Heuristik-Prüfung' wird die Authentifizierungsinformation erzeugt. Im Falle einer erfolgreichen Überprüfung der Authentizität des Inhalts der Retourensendung wird die Retourensendung final in der Paketstation 2 angenommen. Die Retourensendung wird verschlossen und der Absender (Kunde, der die Retourensendung aufgibt) erhält beispielsweise eine Einlieferungsbestätigung. Für den Fall, dass die Authentizität des Inhalts der Sendung nicht bestätigt werden kann, kann beispielsweise bereits die Annahme verweigert werden und entsprechend der ursprünglich Absender des Inhalts der Sendung benachrichtigt werden.

Die authentifizierte Sendung verlässt zum Transport die Paketstation 2, und wird einem Zusteller 3 zum Übermitteln der Sendung an einen Empfänger 6 übergeben.

Das vorstehend ausgeführte Überprüfen der Authentizität des Inhalts einer Sendung (durchgeführt bei der Entgegennahme im Paketshop) kann analog auch bei der Zustellung der Sendung an einem Empfänger erfolgen.

Hierzu kann beispielsweise ein Scanner 310 des Zustellers 3 mit einer Erfassungseinheit 311 und/oder 312, und einer Erzeugungseinheit 313 eingerichtet sein.

Mit der Erfassungseinheit 311 können beispielsweise Daten der Sendung, z.B. eine Referenzinformation (z.B. eine auf der Sendung aufgedruckte oder von der Sendung umfasste Kennung (z.B. eine ID, ein Barcode, oder dergleichen)) erfasst werden. Die Erfassungseinheit 311 kann beispielsweise entsprechende Sensorik, wie z.B. mindestens einen Sensor aufweisen, bzw. der mindestens eine Sensor kann in der Erfassungseinheit 311 des Scanners 310 integriert sein. Alternativ oder zusätzlich, kann zur Erfassung auch die Erfassungseinheit 312, umfasst von dem Scanner 310, verwendet werden. Die Erfassungseinheit 312 weist eine Sensorik, wie z.B. mindestens einen Sensor auf, mit dem ein Erfassen von Daten der Sendung, vorliegend die zu zustellende Sendung, möglich ist.

Der Scanner 310 bestimmt, beispielsweise über eine Abfrage der Datenbank 52, die beispielsweise an den Server 51 über das Kommunikationsnetz 4 gesendet wird, Plausibilitätsinformationen, die indikativ für einen zu authentifizierenden Inhalt der Sendung sind. Beispielsweise kann die Plausibilitätsinformation in der Datenbank hinterlegt worden sein, als eine Sendung mit vergleichbarem Inhalt zu einem früheren Zeitpunkt (z.B. eine andere Person) zugestellt wurde. Zusätzlich oder alternativ ist die Plausibilitätsinformationen von dem Versender des Inhalts der Sendung (beispielsweise ist der Inhalt der Sendung im Rahmen eines Onlineeinkaufes von dem Empfänger 6 erworben worden) in der Datenbank 52 hinterlegt. Die Plausibilitätsinformation umfassen beispielsweise 'Soll-Daten' für den Inhalt der Sendung, beispielsweise Größe, zumindest ein optisches Merkmal, Anzahl der Objekte, oder dergleichen den Inhalt der Sendung klassifizierenden Parameter.

Der Empfänger kann die Sendung öffnen, und beispielsweise mittels der Erfassungseinheit 312, die zum Beispiel mindestens einen Sensor (z.B. einen optischen Sensor) umfasst, kann eine Bildinformation des Inhalts der Sendung erfasst werden (,Ist-Daten').

Die Bildinformation kann beispielsweise von einer von dem Scanner 310 umfassten Auswerteeinheit (nicht dargestellt) ausgewertet werden, um beispielsweise die Größe, zumindest ein optisches Merkmal, die Anzahl der Waren, etc. des Inhalts der Sendung zu erfassen. Eine entsprechende Auswerteeinheit kann beispielsweise auch auf einem Server, z.B. Server 51 implementiert sein, wobei die erfasste Bildinformation beispielsweise verbunden mit einer Anfrage zur Auswertung der Bildinformation über das Netz 4 an den Server gesendet wird. Nach der Auswertung der Bildinformation erfolgt beispielsweise ein Zurücksenden dieser den Inhalt der Sendung klassifizierenden Parameter als Antwort, die von dem Scanner 24 empfangen wird.

Wie bereits in Verbindung mit der Entgegennahme einer Retourensendung ausgeführt wurde, kann basierend auf einem Vergleich zwischen den bestimmten Plausibilitätsinformationen und den erfassten Daten repräsentierend den Inhalt der Sendung eine Authentifizierungsinformation erzeugt werden. Der Empfänger 6 der Sendung erhält somit eine Verifizierung, dass es sich bei dem Inhalt der Sendung auch um den tatsächlich erwarteten Inhalt handelt. Sollte die Authentifizierungsinformation die Authentizität des Inhalts der Sendung in Frage stellen, kann der Empfänger 6 beispielsweise die Annahme der Sendung verweigern.

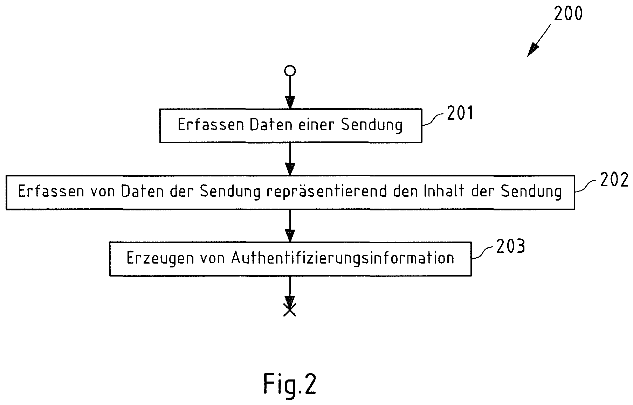

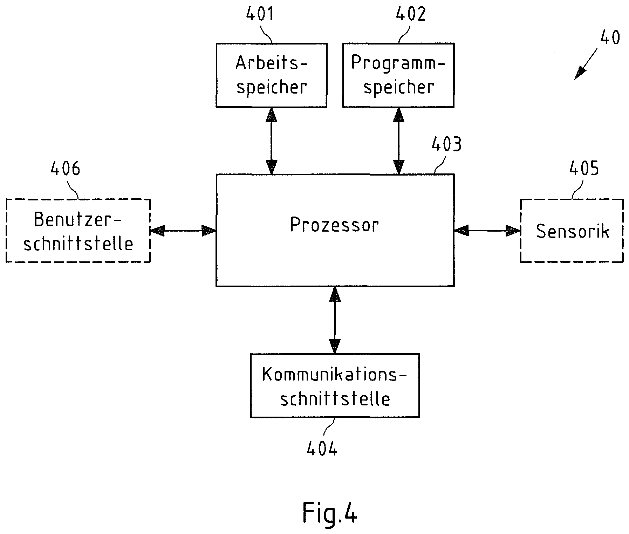

Fig. 2 zeigt ein Flussdiagramm 200 einer beispielhaften Ausführungsform eines Verfahrens nach dem ersten Aspekt. Das Verfahren wird beispielsweise von der Entgegennahmeeinrichtung 24 und/oder dem Scanner 310 der Fig. 1 ausgeführt, die jeweils beispielsweise als Vorrichtung 40 gemäß Fig. 4 ausgebildet sein können.

In einem ersten Schritt 201 werden Daten einer Sendung erfasst. Die Sendung ist mit zumindest einer Information versehen, die ein Bestimmen von Plausibilitätsinformationen ermöglicht. Zum Beispiel enthalten und/oder repräsentieren die erfassten Daten die Information, mit der die Sendung versehen ist und die ein Bestimmen von Plausibilitätsinformationen ermöglicht. Die Plausibilitätsinformationen sind indikativ für einen zu authentifizierenden Inhalt der Sendung.

In einem zweiten Schritt 202 werden Daten repräsentierend den Inhalt der Sendung erfasst.

In einem dritten Schritt wird eine Authentifizierungsinformation erzeugt. Die Authentifizierungsinformation ist indikativ für die Authentizität, d.h. beispielsweise die Echtheit, des Inhalts der Sendung. Basierend auf einem Vergleich, bei dem die bestimmten Plausibilitätsinformationen mit den erfassten Daten repräsentierend den Inhalt der Sendung verglichen werden, wird die Authentifizierungsinformation erzeugt. Wenn der Vergleich positiv ausgefallen ist, umfasst die Authentifizierungsinformation insbesondere zumindest einen Teil, der repräsentativ dafür ist, dass der Inhalt der Sendung authentifiziert ist. Wenn der Vergleich negativ ausgefallen ist, umfasst die Authentifizierungsinformation insbesondere zumindest einen Teil, der repräsentativ dafür ist, dass die Authentifizierung des Inhalts der Sendung fehlgeschlagen ist, oder dass der Inhalt der Sendung nicht authentifiziert werden konnte.

Um den Inhalt einer weiteren Sendung zu überprüfen, ob deren Inhalt einem erwarteten Inhalt entspricht, kann im vorliegenden Ausführungsbeispiel das Flussdiagramm 200 erneut ausgeführt werden.

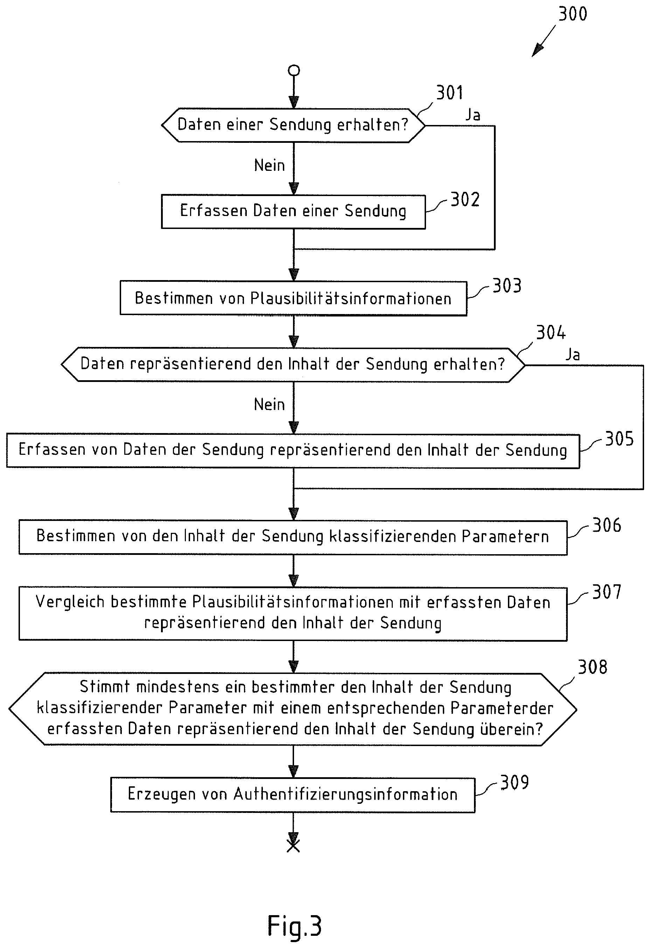

Fig. 3 zeigt ein Flussdiagramm 300 einer beispielhaften Ausführungsform eines Verfahrens nach dem ersten Aspekt. Das Verfahren wird beispielsweise von der Entgegennahmeeinrichtung 24 und/oder dem Scanner 310 der Fig. 1 ausgeführt, die jeweils beispielsweise als Vorrichtung 40 gemäß Fig. 4 ausgebildet sein können.

In Schritt 301 wird überprüft, ob Daten einer Sendung erhalten wurden. Hierbei handelt es sich um erfasste Daten einer Sendung, die von einer Sendung, die mit zumindest einer Information versehen ist erfasst wurden. Die erfassten Daten, die in Schritt 301 erhalten werden können, ermöglichen ein Bestimmen von Plausibilitätsinformationen.
Für den Fall, dass keine derartigen Daten einer Sendung erhalten wurden, werden in Schritt 302 die Daten einer Sendung erfasst.

Die erhaltenen Daten einer Sendung (Schritt 301) oder die erfassten Daten einer Sendung (Schritt 302) werden in Schritt 303 zum Bestimmen von Plausibilitätsinformationen verwendet. Die Plausibilitätsinformationen sind indikativ für einen zu authentifizierenden Inhalt der Sendung. Beispielsweise umfassen die erfassten Daten der Sendung eine Referenzinformation, mittels der eine Abfrage einer Datenbank, z.B. Datenbank 52 nach Fig. 1 durchgeführt werden kann. In der Datenbank sind beispielsweise Plausibilitätsinformationen betreffend den Inhalt der Sendung mit der Referenzinformation verknüpft und/oder assoziiert. Entsprechend kann das Bestimmen der Plausibilitätsinformationen beispielsweise über diese Abfrage der Datenbank ermöglicht sein.

In Schritt 304 wird überprüft, ob Daten repräsentierend den Inhalt der Sendung erhalten wurden. Hierbei handelt es sich um erfasste Daten repräsentierend den Inhalt der Sendung. Für den Fall, dass keine Daten repräsentierend den Inhalt der Sendung erhalten wurden, wird in Schritt 304 ein Erfassen von Daten repräsentierend den Inhalt der Sendung durchgeführt. Die in Schritt 304 erhaltenen oder in Schritt 305 erfassten Daten repräsentierend den Inhalt der Sendung werden in Schritt 306 zum Bestimmen von den Inhalt der Sendung klassifizierenden Parametern verwendet. Die den Inhalt der Sendung klassifizierenden Parameter werden auf Basis des tatsächlichen Inhalts der Sendung erfasst.

In Schritt 307 wird ein Vergleich zwischen der zumindest einen bestimmten Plausibilitätsinformation und den erfassten Daten repräsentierend den Inhalt der Sendung durchgeführt. Hierbei wird beispielsweise ein den Inhalt der Sendung klassifizierender Parameter (z.B. Gewicht und Farbe des Inhalts) der Plausibilitätsinformation mit dem entsprechenden den Inhalt der Sendung klassifizierenden Parameter der erfassten Daten repräsentierend den Inhalt der Sendung verglichen. Es erfolgt also ein Vergleich zwischen einer Art ,Soll-Wert' (Plausibilitätsinformation) und einer Art ,Ist-Wert' (erfasste Daten repräsentierend den Inhalt der Sendung). Weichen die zu vergleichenden Werte voneinander ab, indem beispielsweise ein vorbestimmter Schwellwert, der ein zulässiges Maß der Abweichung definiert, überschritten, ist es möglich, dass der tatsächliche Inhalt der Sendung nicht dem erwarteten, d.h. authentischen Inhalt der Sendung entspricht. Für diesen Fall kann optional (und daher in dem Flussdiagramm 300 nicht dargestellt) eine Prüfvorgabeinformation erzeugt werden, die beispielsweise durch eine Person (z.B. Zusteller 3 nach Fig. 1) überprüft werden kann. Das manuelle Überprüfen durch die Person kann eine abschließende Beurteilung erlauben, ob der Inhalt der Sendung authentisch, d.h. z.B. echt und nicht nachgemacht oder verändert, ist. Dies wird durch den Schritt 308 überprüft.

In dem Schritt 309 wird eine Authentifizierungsinformation erzeugt. Das Erzeugen der Authentifizierungsinformation erfolgt auf Basis des Vergleichsergebnisses des Schrittes 307, 308.

Um den Inhalt einer weiteren Sendung zu überprüfen, ob deren Inhalt einem erwarteten Inhalt entspricht, kann im vorliegenden Ausführungsbeispiel das Flussdiagramm 300 erneut ausgeführt werden.

Die gemäß dem Flussdiagramm 300 angegebene Reihenfolge der Verfahrensschritte 301 bis 309 ist lediglich exemplarisch und nicht zwingend vorgeschrieben. Soweit sinnvoll, kann die Reihenfolge der Verfahrensschritte verändert werden, wobei das Überprüfen der Authentizität des Inhalts einer Sendung weiterhin möglich ist.

Fig. 4 zeigt eine schematische Darstellung einer beispielhaften Ausführungsform einer Vorrichtung 40, die im Kontext der vorliegenden Erfindung eingesetzt werden kann.

Die Vorrichtung 40 kann beispielsweise die Erfassungseinheit 220 der Annahmeeinrichtung 22, die Erfassungseinheit 230 der Sensorik 23, oder die Erfassungseinheit 311 bzw. 312 des Scanners 310 der Fig. 1 repräsentieren. Die Vorrichtung 40 kann beispielsweise die Erzeugungseinheit 210 der Ausgabeeinrichtung 21, oder die Erzeugungseinheit 313 des Scanner 310 der Fig. 1 repräsentieren. Die Vorrichtung 40 kann beispielsweise die Entgegennahmeeinrichtung 24 nach Fig. 1 repräsentieren.

Die Vorrichtung 40 kann beispielsweise das Flussdiagramm 200 der Fig. 2 oder 300 der Fig. 3 ausführen.

Die Vorrichtung 40 umfasst einen Prozessor 403 mit zugeordnetem Arbeitsspeicher 401 und Programspeicher 402. Der Prozessor 403 führt beispielsweise Programmanweisungen aus, die im Programmspeicher 402 gespeichert sind. Die Programmanweisungen führen das Verfahren gemäß dem ersten Aspekt aus und/oder steuern dieses. Damit enthält der Programmspeicher 402 ein Computerprogramm nach dem fünften Aspekt und stellt ein Computerprogrammprodukt zu dessen Speicherung dar. Vorrichtung 40 stellt ein Beispiel einer Vorrichtung gemäß dem zweiten Aspekt oder eine Vorrichtung eines Systems nach dem dritten Aspekt dar.

Der Programmspeicher 402 kann beispielsweise ein persistenter Speicher, wie beispielsweise ein Read-Only-Memory (ROM)-Speicher sein. Der Programmspeicher 402 kann beispielsweise fest mit dem Prozessor 403 verbunden sein, kann aber alternativ auch lösbar mit dem Prozessor 403 verbunden sein, beispielsweise als Speicherkarte, Diskette, oder optisches Datenträgermedium (z.B. eine CD oder DVD). In dem Programmspeicher 402, oder in einem separaten Speicher, können auch weitere Informationen abgespeichert sein.

Der Arbeitsspeicher 401 wird beispielsweise zur Speicherung temporärer Ergebnisse während der Abarbeitung der Programmanweisungen genutzt, es handelt sich hierbei beispielsweise um flüchtigen Speicher, wie beispielsweise einen Random-Access-Memory (RAM)-Speicher.

Der Prozessor 403 ist ferner operativ mit einer Kommunikationsschnittstelle 404 verbunden, mit der beispielsweise ein Informationsaustausch mit anderen Vorrichtungen möglich ist (siehe z.B. die gestrichelten Pfeile in Fig. 1).

Die Vorrichtung 40 kann weitere Komponenten enthalten. Falls die Vorrichtung 40 die Erfassungseinheit 220, 230 oder 311, 312 repräsentiert, ist insbesondere eine Sensorik 405 vorgesehen, die beispielsweise zur optischen Erfassung (z.B. in Form eines Scanners) der Daten einer Sendung oder der Daten des Inhalts der Sendung eingerichtet ist und mit dem Prozessor 403 operativ verbunden ist.

Falls die Vorrichtung 40 die Erfassungseinheit 220, 230, 311, 312 repräsentiert, kann die Sensorik 405 beispielsweise mindestens einen Sensor umfassen. Die Sensorik ist insbesondere dazu eingerichtet, die Plausibilitätsinformationen und die Daten repräsentierend den Inhalt der Sendung indikativ für zumindest einen den Inhalt der Sendung klassifizierenden Parameter zu erfassen.

Falls die Vorrichtung 40 die Erzeugungseinheit 210 oder 313 repräsentiert, können mit dem Prozessor 403 operativ verbundene Mittel zur Erzeugung einer Authentifizierungsinformation vorhanden sein. Diese Mittel können beispielsweise zum Vergleich von bestimmten Plausibilitätsinformationen mit erfassten Daten repräsentierend den Inhalt einer Sendung eingerichtet sein.

Optional kann die Vorrichtung 40 eine Benutzerschnittstelle 406 aufweisen, mittels der beispielsweise eine Wiedergabe von Informationen (z.B. eine optische Wiedergabe) möglich ist. Beispielsweise ist die Benutzerschnittstelle eine Displayvorrichtung (z.B. ein Liquid Crystal Display (LCD), oder ein Light Emitting Diode (LED)-Display oder dergleichen).

Die in dieser Spezifikation beschriebenen beispielhaften Ausführungsformen / Ausführungsbeispiele sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Erfassen von Daten einer Sendung oder Erhalten von erfassten Daten einer Sendung, wobei die Sendung mit zumindest einer Information versehen ist, die ein Bestimmen von Plausibilitätsinformationen indikativ für einen zu authentifizierenden Inhalt der Sendung ermöglicht;
- Erfassen von Daten repräsentierend den Inhalt der Sendung oder Erhalten von erfassten Daten repräsentierend den Inhalt der Sendung;
- Erzeugen einer Authentifizierungsinformation indikativ für die Authentizität des Inhalts der Sendung zumindest teilweise basierend auf den bestimmten Plausibilitätsinformationen und den erfassten Daten repräsentierend den Inhalt der Sendung oder Ausgeben der bestimmten Plausibilitätsinformationen und der erfassten Daten repräsentierend den Inhalt der Sendung zum Erzeugen einer Au thentifizierungsinformati on.

2. Verfahren nach Anspruch 1, wobei die Plausibilitätsinformationen und die Daten repräsentierend den Inhalt der Sendung indikativ für zumindest einen der folgenden den Inhalt der Sendung klassifizierenden Parameter sind:
- Gewicht des Inhalts der Sendung;
- Größe des Inhalts der Sendung;
- Chemische Zusammensetzung des Inhalts der Sendung;
- Optische Merkmale des Inhalts der Sendung;
- Objekterkennung des Inhalts der Sendung;
- Markenerkennung des Inhalts der Sendung;
- Produkterkennung des Inhalts der Sendung;
- Anzahl der Objekte des Inhalts der Sendung;
- Barcode umfasst von dem Inhalt der Sendung;
- Magnetismus des Inhalts der Sendung;
- oder eine Kombination hiervon.

3. Verfahren nach Anspruch 2, wobei im Rahmen des Vergleichs mindestens ein den Inhalt der Sendung klassifizierender Parameter der Plausibilitätsinformationen mit einem entsprechenden Parameter der erfassten Daten repräsentierend den Inhalt der Sendung verglichen wird.

4. Verfahren nach einem der vorhergehenden Ansprüche, wobei die Daten repräsentierend den Inhalt der Sendung mit mindestens einem Sensor erfasst werden.

5. Verfahren nach einem der vorhergehenden Ansprüche, wobei die zumindest eine Information der Sendung eine Referenzinformation umfasst, welche insbesondere durch mit in einer Datenbank hinterlegten Plausibilitätsinformationen verknüpft und/oder assoziiert ist.

6. Verfahren nach Anspruch 5, wobei die in der Datenbank hinterlegten Plausibilitätsinformationen signiert von mindestens einer vertrauenswürdigen Drittpartei hinterlegt sind.

7. Verfahren nach einem der vorhergehenden Ansprüche, wobei das Erfassen von Daten repräsentierend den Inhalt der Sendung mittels einer Annahmeeinrichtung und/oder einer Ausgabeeinrichtung ermöglicht ist.

8. Verfahren nach Anspruch 7, wobei der mindestens eine Sensor in der Annahmeeinrichtung und/oder Ausgabeeinrichtung integriert ist.

9. Verfahren nach einem der vorhergehenden Ansprüche, das Verfahren umfassend:
- Hinterlegen von erfassten Daten repräsentierend den Inhalt der Sendung als Plausibilitätsinformationen in einer Datenbank.

10. Verfahren nach Anspruch 9, wobei eine Vielzahl von erfassten Daten repräsentierend den Inhalt der Sendung als Plausibilitätsinformationen in einem Datensatz von Plausibilitätsinformationen hinterlegt werden.

11. Verfahren nach einem der vorhergehenden Ansprüche, das Verfahren umfassend:
- Bestimmen einer Heuristikanalyseinformation basierend auf erfassten Daten repräsentierend den Inhalt der Sendung;
- Erzeugen einer Prüfvorgabeinformation indikativ für ein manuelles Authentifizieren des Inhalts der Sendung oder Ausgeben der bestimmten Heuristikanalyseinformation zum Erzeugen einer Prüfvorgabeinformation.

12. Verfahren nach Anspruch 11, das Verfahren umfassend:
- Erfassen einer Nutzereingabe oder Erhalten einer erfassten Nutzereingabe bei Vorliegen der Prüfvorgabeinformation.

13. Vorrichtung eingerichtet zur Ausführung und/oder Steuerung des Verfahrens nach einem der Ansprüche 1 bis 12 oder umfassend jeweilige Mittel zur Ausführung und/oder Steuerung des Verfahrens nach einem der Ansprüche 1 bis 12.

14. System, umfassend eine oder mehrere Vorrichtungen, die eingerichtet sind zur Ausführung und/oder Steuerung des Verfahrens nach einem der Ansprüche 1 bis 12 oder Mittel zur Ausführung und/oder Steuerung der Schritte des Verfahrens nach einem der Ansprüche 1 bis 12 aufweisen.

15. Computerprogramm, umfassend Programmanweisungen, die einen Prozessor zur Ausführung und/oder Steuerung des Verfahrens gemäß einem der Ansprüche 1 bis 12 veranlassen, wenn das Computerprogramm auf dem Prozessor läuft.
